# EUROPEAN PATENT SPECIFICATION

(11) **EP 0 915 628 B1**
(45) Date of publication and mention of the grant of the patent: **14.05.2008**
(21) Application number: 98308984.8
(22) Date of filing: 03.11.1998
(51) Int. Cl.: H04Q 7/20, H04Q 7/32, H04Q 7/22

(54) **Cellular wireless communication system with fixed terminals**
Zellulares schnurloses Übertragungssystem mit festen Endgeräten
Système de communication cellulaire sans fil comportant des postes fixes

(30) Priority: 07.11.1997 EP 97308948
(43) Date of publication of application: 12.05.1999
(73) Proprietor: Lucent Technologies Inc., Murray Hill, New Jersey 07974-0636 (US)
(72) Inventor: Zhou, Hai, Grange Park, Swindon SN5 6JZ (GB)
(74) Representative: Williams, David John

(56) References cited:
- EP-A- 0 695 102
- WO-A-94/19877
- WO-A-96/13116
- WO-A-97/11508
- WO-A-97/36441
- WO-A-97/36442
- BRAENDSTROEM C ET AL: "FIXED CELLULAR SYSTEMS AN ALTERNATIVE WAY TO PROVIDE BASIC TELEPHONY" ERICSSON REVIEW, vol. 73, no. 1, 1 January 1996 (1996-01-01), pages 4-13, XP000584595

## Description

This invention relates to cellular wireless communication systems (e.g. GSM radio systems) with fixed terminals.

Cellular radio communication systems are largely used to provide telephone and/or data services to mobile terminals. In competition with traditional telephone services where the subscriber is connected by land line to the switching centre, cellular radio systems service providers have been seeking to provide service to fixed terminals. A fixed terminal can use a highly directional antenna allowing its communication channels to be reused at a closer base station than would otherwise be the case. That is the number of times that a frequency band can be re-used is increased. That allows the telephone service provider to reduce the charge rate for the fixed service so that it is competitive with services provided via land line.

WO 94/19877 discloses a system in which a fixed terminal communicates with a base station, and mobile terminals can communicate with the base station via the fixed station. However, this does not adapt the system to the fixed antenna to increase frequency reuse and reduce the charge rate.

WO 97/36442 discloses a system in which a mobile terminal is connected to an interface unit and communicates with a base station via point-to-point microwave link. This system uses different frequency bands and antennas for the fixed link compared to the mobile terminals, and hence does not impact frequency reuse and the charge rate of the mobile system.

WO 97/11508 discloses a point-to-multipoint radio relay system in which a central station beam-steers a lobe towards subscriber stations. This does not disclose combining both fixed and mobile stations in the same system.

Against this background there is provided a cellular wireless communication system, providing communication between base stations and mobile or fixed terminals, including a fixed installation comprising a fixed directional antenna directed at a predetermined base station and an interface for providing communications between a mobile terminal and the antenna, wherein when communication is via the interface, information transmitted on the up link signalling channel includes an indication that the fixed antenna is in use, and wherein the base station has an array of two or more antennas and means responsive to receipt of said indication to adjust the phases of down link transmissions from individual antennas to produce a lobe directed at the known position of the fixed installation; and to reduce the power of down link transmissions to the fixed installation. This allows a subscriber to use one mobile telephone set for both fixed and mobile communications, so having only one account, and may allow the telephone service provider to reduce the charging rate for the fixed service to a level which is competitive with service provided via landline.

In one form, the interface includes a connector and the mobile terminal includes a switch or proximity detector which is operated when the connector is connected to the mobile station, the mobile terminal being responsive to operation of the switch or proximity detector to transmit said indication.

In another form, the interface includes a radio transmitter/receiver for communication with the mobile terminal.

The interface may include means storing a code readable by the mobile which is responsive to the code to transmit said indication.

In that form, the indication transmitted may be the code.

In an alternative form the interface includes a processor operable to encrypt a data word received from the mobile terminal and to return the encrypted word to the terminal, the mobile terminal performs a similar encryption and only if the two encrypted words are the same is the indication transmitted to the base station.

The base station may have a plurality of antennas each with a respective tapped delay line in which the tap output signals are weighted and summed, and wherein on receipt of the indication, the weights are determined so as to direct a lobe at the known position of the fixed installation. That allows a further reduction in power of transmissions on the up link, further reducing interference by the fixed station and allowing up link channels to be reused by a closer base station or mobile terminal than otherwise and/or reduces interference.

The system preferably includes a charging centre which during a call in which the base station receives the indication, reduces the charge rate.

Embodiments of the invention will now be described, by way of example with reference to the accompanying drawings, in which:

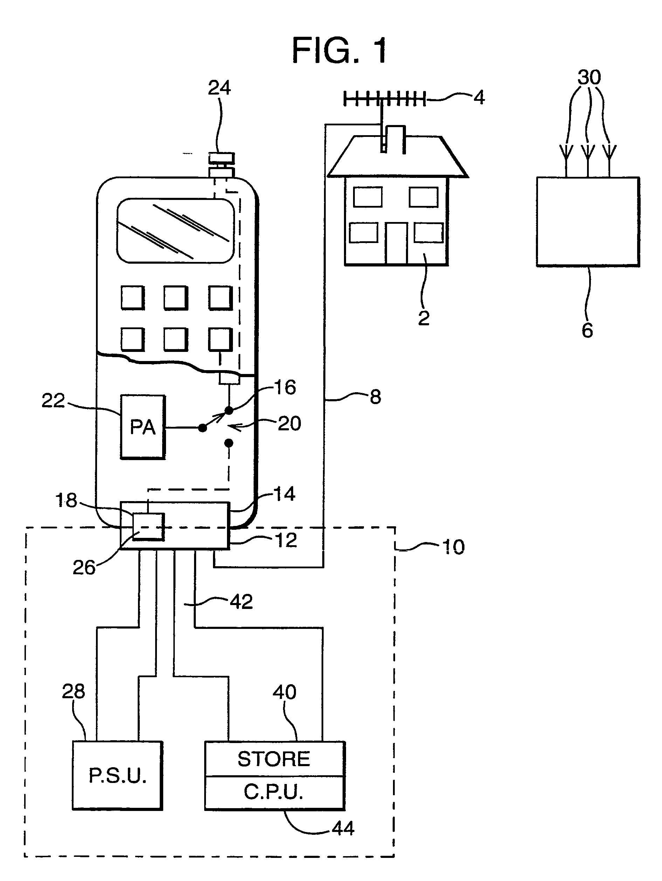

Figure 1 is a schematic representation of a fixed installation in a cellular wireless communication system embodying the invention; and
Figure 2 is a schematic representation of an antenna array at a base station in a system embodying the invention;
Figure 3 is a schematic representation of another system embodying the invention; and
Figure 4 is a block diagram showing features of the base station.

Referring to the drawing, a building e.g. a subscriber's home 2, has a directional antenna e.g. a Yagi antenna 4 fixedly mounted thereon. The antenna 4 is designed to have a thin pencil beam in its polar both for reception and transmission. The beam is directed at a base station 6.

The antenna 4 is connected via a coaxial cable to an interface unit 10. The interface unit 10 includes a multiway connector 12 for connection to a complementary connector 14 in a mobile telephone set 16. A switch 18 is operated when the connector 12 is connected to change switch contacts 20 over so connecting the output of the telephone's wide band power amplifier 22 to the cable 8 through the connector 12 instead of to the mobile's omnidirectional antenna 24.

The switch 18 may have an operating member (not shown) which is depressed by the connector 12 when connected or may be in the form of a proximity switch operated by a magnet 26 in the connector 12.

The connector 12 also connects the telephone set 16 to a power supply unit 28 in the interface 10.

Operation of the switch or proximity detector 18 may also be used to trigger the transmission on the signalling channel in use by the mobile of an indication that it is connected to its fixed antenna installation.

Because the antenna is directional, communications on the uplink will be much less likely to interfere with other stations than communications via the mobile telephone's omnidirectional antenna 24. Knowing that, the system can reuse channels in use by the mobile via its fixed installation at base station or mobile which is at a much reduced distance compared with the position with the omnidirectional antenna 24. The directional qualities of the antenna 4 also lead the base station 6 to instruct the mobile terminal to transmit at reduced power, compared with the power which would be needed with the omnidirectional antenna 24, which further reduces interference.

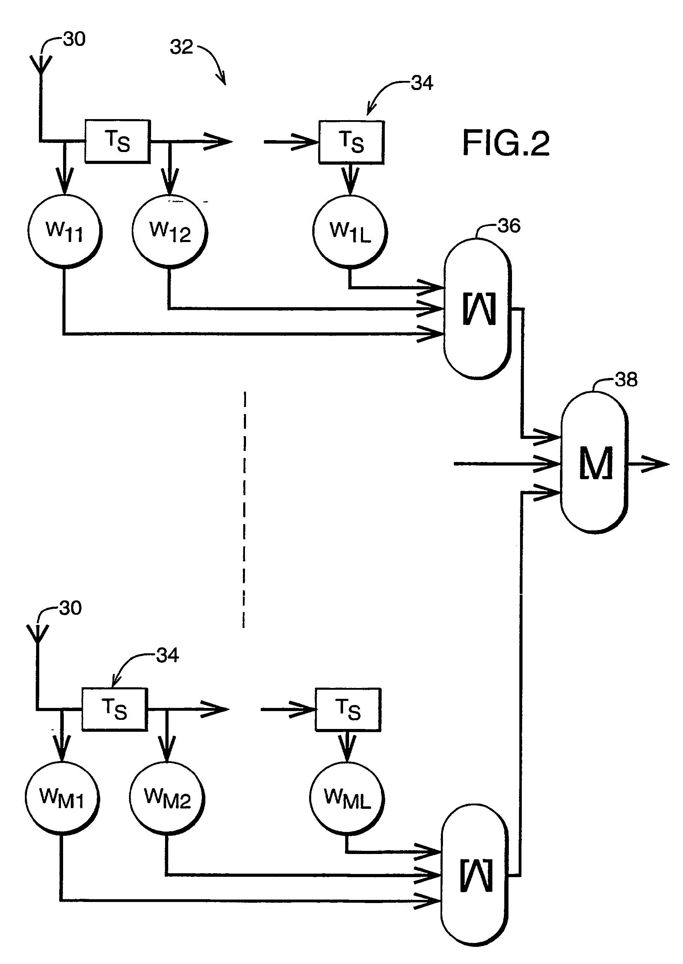

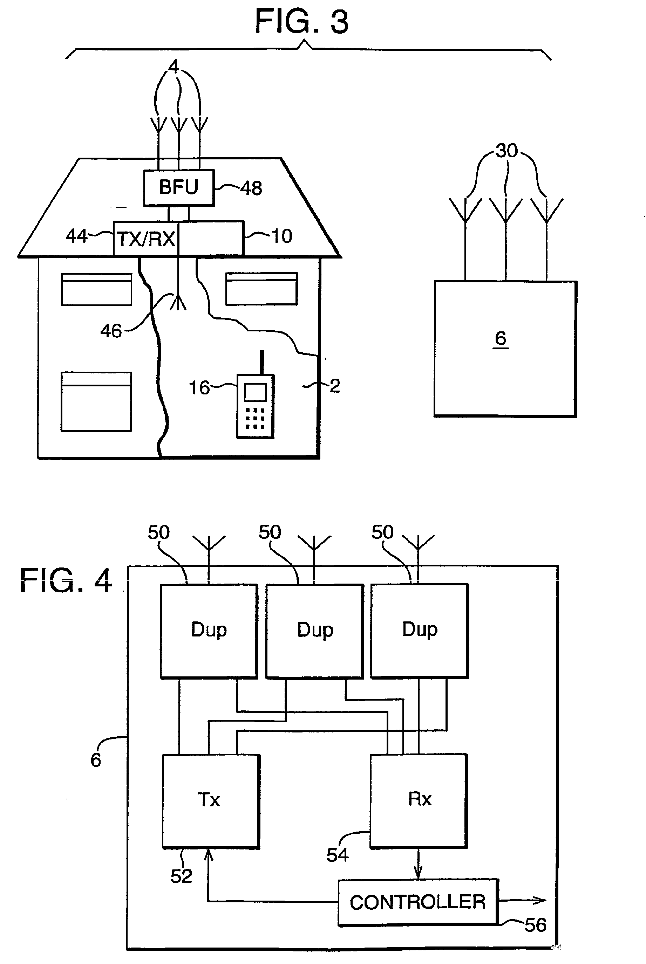

Referring to Figure 4, the base station 6 has a plurality of antennae 30 in a diversity array, each connected to respective duplexers 50. Transmitter and receiver circuits 52 and 54 are connected to each of the duplexers so that signals can be both transmitted and received through the same antennae. The receiver circuit includes the space time processors shown in Figure 2. As the position of the fixed installation is known, a controller 56 is responsive to receipt of the indication, to adjust the output phases of the transmitter circuit 52 so that the antennae 30 produce a narrow beam directed at the antenna 4 and reduces the power.

The controller also provides information allowing the channel in use between the fixed installation and the mobile station, to be re-used in an adjacent cell, and instructs a charging centre to reduce the rate for the call.

Since the antenna 4 also produces a stronger signal received from the base station 6, the base station can further reduce the power on its downlink communications with the mobile terminal 16.

On the uplink, each antenna 30 in the array has a respective space/time processor 32, shown in Figure 2, comprising a delay line 34 having taps at spacings of T_{S} equivalent to one symbol interval. The outputs from each tap are weighted by a vector w and the weighted outputs are summed in a summer 36. The sums are summed in a summer 38. As the position of the fixed installation is known a predetermined set of weights can be loaded into the space/time processors so as to steer the array at the antenna 4.

The simple system described above in which a switch or proximity detector 18 is operated by the connector 12, may be open to abuse and is only possible when the interface includes a connector 12. In order to better ensure that the cheap rate is only given to mobiles when attached to the antenna 4, the interface 10 may include means 40 for storing a code. In a simple example the means 40 may comprise a set of switches, e.g. a DIP (dual in line switch). The switches may be set to a predetermined code readable via a bus 42 by the mobile terminal 16. The code may be utilised in various ways. For example the mobile terminal may only transmit the attached to antenna indication if the code is the same as one stored in the mobile. Alternatively, the code may be transmitted and a comparison may be made at the base station.

In another alternative, the interface 10 may also include a processor 42 operable under control of a program stored in store 40 to encrypt a data word received from the mobile and to return the encrypted word over the bus 42. The mobile performs a similar encryption and only if the two encrypted words are the same is the antenna attached indication transmitted to the base station.

In order to allow the user some mobility, the interface 10 shown in Figure 3 communicates with the mobile terminal 16 via radio channels provided by a low power transmitter and receiver 44 and ceiling mounted antenna 46. The channels may be the same or different from the channel used for communication via the fixed antenna with the base station. In this case the interface may, itself, add the indication that the fixed antenna is in use to the up link signalling information. In the embodiment of Figure 3 an array of antennas 4 is provided. A beam forming unit 48 adjusts the signals to each antenna to form a thing pencil beam directed at the base station 6, both for reception and transmission.

## Claims

1. A cellular mobile communication system, providing direct communication between base stations (6) and mobile terminals (16) over ones of a set of radio channels allocated for cellular mobile communications, said system including a fixed installation (2) comprising a fixed directional antenna (4) directed at a predetermined base station (6) and an interface (10) for providing communications between a mobile terminal (16) and the antenna (4) so as to obtain communications between the antenna (4) and the predetermined base station (6) over a channel of said set of radio channels, wherein when communication is via the interface (10), signalling information transmitted on the up link includes an indication that the fixed antenna (4) is in use, wherein the base station (6) has an array of two or more antennas (30) and on receipt of said indication adjusts the phases of down link transmissions from individual antennas (30) to produce a lobe directed at the known position of the fixed installation (2); and wherein on receipt of said indication, the base station (6) reduces the power of down link transmissions to the fixed installation (2).

2. A cellular wireless communication system as claimed in claim 1, wherein the interface (10) includes a connector (12) and the mobile terminal (16) includes a switch or proximity detector (18) which is operated when the interface (10) is connected to the mobile station (16), the mobile terminal (16) being responsive to operation of the switch or proximity detector (18) to transmit said indication.

3. A cellular wireless communication system as claimed in claim 1, wherein the interface (10) includes a radio transmitter/receiver (44) for communication with the mobile terminal (16).

4. A cellular wireless communication system as claimed in claim 1 or 3, wherein the interface (10) includes means storing (40) a code readable by the mobile (16) which is responsive to the code to transmit said indication.

5. A cellular wireless communication system as claimed in claim 4, wherein the indication transmitted is the code.

6. A cellular wireless communication system as claimed in claim 1 or 3, wherein the interface (10) includes a processor (44) operable to encrypt a data word received from the mobile terminal (16) and to return the encrypted word to the terminal (16), and wherein the mobile terminal (16) performs a similar encryption and only if the two encrypted words are the same is the indication transmitted to the base station (16).

7. A cellular wireless communication system as claimed in any preceding claim, wherein the base station (6) has a plurality of antennas (30) each with a respective tapped delay line space/time processor (32) in which the tap output signals are weighted and summed, and wherein on receipt of the indication, the weights are determined so as to direct a lobe at the known position of the fixed installation (2).

8. A cellular wireless communication system as claimed in any preceding claim, including a charging centre which during a call in which the base station (6) receives the indication, reduces the charge rate.

9. A cellular wireless communication system as claimed in any preceding claim, including means responsive to receipt of said indication to re-use the channel on which the mobile (16) is communicating, in an adjacent cell.

## Patentansprüche

1. Zellulares Mobilkommunikationssystem,
welches über einzelne Funkkanäle aus einer für zellulare Mobilkommunikation reservierten Menge von Funkkanälen eine direkte Kommunikation zwischen Basisstationen (6) und Mobilterminals (16) vorsieht,
wobei das System eine auf eine vorbestimmte Basisstation (6) gerichtete ortsfeste Installation (2) mit einer ortsfesten Richtantenne (4) und ein Interface (10) zum Verschaffen von Kommunikationsvorgängen zwischen einem Mobilterminal (16) und der Antenne (4) vorsieht, um so über einen Kanal aus der Menge von Funkkanälen Kommunikationsvorgänge zwischen der Antenne (4) und der vorbestimmten Basisstation (6) zu erzielen,
wobei dann, wenn die Kommunikationsvorgänge über das Interface (10) ablaufen, auf der Aufwärtsstrecke übertragene Signalisierungsinformation eine Markierung beinhaltet, dass die ortsfeste Antenne (4) in Gebrauch ist,
wobei die Basisstation (6) eine Anordnung von zwei oder mehr Antennen (30) aufweist und auf den Empfang der Markierung hin die Phasen der Sendungen von individuellen Antennen (30) auf der Abwärtsstrecke so anpasst, dass eine auf die bekannte Position der ortsfesten Installation (2) gerichtete Richtkeule erzeugt wird, und
wobei die Basisstation (6) auf den Empfang der Markierung hin die Leistung der Sendungen zu der ortsfesten Installation (2) auf der Abwärtsstrecke vermindert.

2. Zellulares drahtloses Kommunikationssystem nach Anspruch 1, wobei das Interface (10) einen Verbinder (12) und das Mobilterminal (16) einen Schalter oder Näherungsdetektor (18) beinhaltet, der betätigt wird, wenn das Interface (10) mit der Mobilstation (16) verbunden ist, wobei das Mobilterminal (16) auf die Betätigung des Schalters oder des Näherungsdetektors (18) so reagiert, dass die Markierung gesendet wird.

3. Zellulares drahtloses Kommunikationssystem nach Anspruch 1, wobei das Interface (10) einen Funksender/Empfänger (44) zur Kommunikation mit dem Mobilterminal (16) beinhaltet.

4. Zellulares drahtloses Kommunikationssystem nach Anspruch 1 oder 3, wobei das interface (10) eine Einrichtung zum Speichern (40) eines durch das Mobiltelefon (16) lesbaren Codes beinhaltet, welches auf den Code so anspricht, dass die Markierung gesendet wird.

5. Zellulares drahtloses Kommunikationssystem nach Anspruch 4, wobei der Code die übertragene Markierung ist.

6. Zellulares drahtloses Kommunikationssystem nach Anspruch 1 oder 3,
wobei das Interface (10) einen zum Verschlüsseln eines von dem Mobilterminal (16) empfangenen Datenwortes und zum Zurückgeben des verschlüsselten Wortes an das Terminal (16) betreibbaren Prozessor (44) aufweist, und
wobei das Mobilterminal (16) eine ähnliche Verschlüsselung durchführt, und nur dann, wenn die beiden verschlüsselten Worte gleich sind, wird die Markierung an die Basisstation (6) übertragen.

7. Zellulares drahtloses Kommunikationssystem nach irgendeinem der vorstehenden Ansprüche,
wobei die Basisstation (6) eine Mehrzahl von Antennen (30) aufweist, von denen jede einen mit Abgriffen versehenen Verzögerungsleitungs-Raum-/Zeitprozessor (32) hat, in welchem die Abgriff-Ausgangssignale gewichtet und aufsummiert werden, und
wobei auf den Empfang der Markierung hin die Gewichtungen so festgelegt werden, dass eine Richtkeule auf die bekannte Position der ortsfesten Installation (2) gerichtet wird.

8. Zellulares drahtloses Kommunikationssystem nach einem der vorstehenden Ansprüche, mit einem Abrechnungszentrum, welches während eines Anrufes, in welchem die Basisstation (6) die Markierung empfängt, die Abrechnungstarifrate vermindert.

9. Zellulares drahtloses Kommunikationssystem nach irgendeinem der vorstehenden Ansprüche, mit einer Einrichtung, die in einer angrenzenden Zelle auf den Empfang der Markierung mit der Wiederbenutzung des Kanals, auf dem das Mobiltelefon (16) kommuniziert, reagiert.

## Revendications

1. Système de communication mobile cellulaire fournissant une communication directe entre des stations de base (6) et des terminaux mobiles (16) sur certains canaux radio attribués aux communications mobiles cellulaires, ledit système comprenant une installation fixe (2) incluant une antenne directionnelle fixe (4) dirigée vers une station de base prédéterminée (6) et une interface (10) destinée à fournir des communications entre un terminal mobile (16) et l'antenne (4) de manière à obtenir des communications entre l'antenne (4) et la station de base prédéterminée (6) sur un canal parmi ledit ensemble de canaux radio, dans lequel, lorsque la communication passe par l'interface (10), les informations de signalisation émises sur la liaison montante comprennent une indication que l'antenne fixe (4) est en service, dans lequel la station de base (6) possède un réseau de deux antennes (30) ou plus et, à réception de ladite indication, ajuste les phases des émissions descendantes à partir des antennes individuelles (30) afin de produire un lobe dirigé vers la position connue de l'installation fixe (2) et dans lequel, à réception de ladite indication, la station de base (6) réduit la puissance des émissions descendantes vers l'installation fixe (2).

2. Système de communication sans fil cellulaire selon la revendication 1, dans lequel l'interface (10) comprend un connecteur (12) et le terminal mobile (16) comprend un commutateur ou détecteur de proximité (18) qui se déclenche lorsque l'interface (10) est connectée à la station mobile (16), le terminal mobile (16) répondant au déclenchement du commutateur ou détecteur de proximité (18) afin d'émettre ladite indication.

3. Système de communication sans fil cellulaire selon la revendication 1, dans lequel l'interface (10) comprend un émetteur-récepteur radio (44) pour la communication avec le terminal mobile (16).

4. Système de communication sans fil cellulaire selon la revendication 1 ou 3, dans lequel l'interface (10) comprend un moyen de stockage (40) d'un code lisible par le mobile (16), celui-ci répondant au code pour émettre ladite indication.

5. Système de communication sans fil cellulaire selon la revendication 4, dans lequel l'indication émise est le code.

6. Système de communication sans fil cellulaire selon la revendication 1 ou 3, dans lequel l'interface (10) comprend un processeur (44) en mesure de chiffrer un mot de données reçu du terminal mobile (16) et de renvoyer le mot chiffré au terminal (16) et dans lequel le terminal mobile (16) exécute un chiffrement similaire, l'indication n'étant émise vers la station de base (6) que si les deux mots chiffrés sont identiques.

7. Système de communication sans fil cellulaire selon l'une quelconque des revendications précédentes, dans lequel la station de base (6) possède une pluralité d'antennes (30), chacune ayant son processeur respectif spatio-temporel à lignes de retard à prises, dans lequel les signaux de sortie des prises sont pondérés et additionnés et dans lequel, à réception de l'indication, les pondérations sont déterminées afin de diriger un lobe vers la position connue de l'installation fixe (2).

8. Système de communication sans fil cellulaire selon l'une quelconque des revendications précédentes, comprenant un centre de chargement qui, pendant un appel au cours duquel la station de base (6) reçoit l'indication, réduit la vitesse de chargement.

9. Système de communication sans fil cellulaire selon l'une quelconque des revendications précédentes, comprenant un moyen en mesure de répondre à la réception de ladite indication pour réutiliser le canal sur lequel le mobile (16) communique, dans une cellule adjacente.
